# FASCICULE DE BREVET EUROPEEN

(11) **EP 0 707 918 B1**
(45) Date de publication et mention de la délivrance du brevet: **03.12.1997**
(21) Numéro de dépôt: 95402293.5
(22) Date de dépôt: 13.10.1995
(51) Int. Cl.: B23K 9/29

(54) **Lance pour soudage électrique sous atmosphère protectrice**
Brenner zum elektrischen Schutzgasschweissen
Torch for electric welding under shielding gas

(30) Priorité: 17.10.1994 FR 9412343
(43) Date de publication de la demande: 24.04.1996
(73) Titulaire: SOUDURE AUTOGENE FRANCAISE, F-95310 Saint Ouen l'Aumone (FR)
(72) Inventeur: Maocec, Christian, F-60460 Percy-sur-Oise (FR)
(74) Mandataire: Le Moenner, Gabriel

(56) Documents cités:
- EP-A- 0 003 780
- DE-A- 2 645 679
- DE-A- 3 535 357
- DE-U- 8 519 433
- US-A- 4 554 432
- US-A- 4 731 518
- PATENT ABSTRACTS OF JAPAN vol. 10 no. 189 (M-494) [2245] ,3 Juillet 1986 & JP-A-61 033779 (KAWASAKI HEAVY IND LTD) 17 Février 1986,

## Description

La présente invention est relative à une lance pour soudage électrique sous atmosphère protectrice.

Le procédé de soudage connu sous le nom de "MIG-MAG" met en oeuvre un arc électrique qui est entretenu entre un fil d'apport, qui dévide en continu dans la torche de soudage, et la pièce à souder. Le bain de fusion et l'arc électrique sont protégés de l'air ambiant par une enveloppe de gaz inerte (MIG) ou actif (MAG), canalisé par une buse montée sur un corps de lance et entourant un diffuseur de gaz, un tube de contact et le fil d'apport.

En fonctionnement, ces pièces montent en température et peuvent atteindre 200 à 300°C.

La buse doit être fixée sur le corps de la lance de façon à pouvoir être rapidement démontée, même lorsqu'elle est très chaude. D'autre part, sa fixation doit être sûre, et conçue pour éviter une séparation intempestive en fonctionnement. En outre, il est préférable qu'il y ait une bonne continuité thermique entre la buse et le corps, de façon à empêcher des différences d'échauffement entre les pièces, susceptibles de perturber le fonctionnement.

Selon une technique connue, l'assemblage de la buse sur le corps de la lance est réalisé par vissage à l'aide d'un gros pas de vis, voir p.ex. US-A-4 731 518. La buse ne risque pas de tomber dans le bain de fusion, mais les pièces sont relativement complexes à usiner, et donc de prix de revient relativement élevé. Pour l'opérateur, le démontage de la buse est long à effectuer, d'autant qu'il y a toujours des risques de grippage des filets, ce qui est très désagréable quand la buse est très chaude.

Selon une autre technique connue, voir p.ex. DE-A-2 645 679, l'extrémité de la lance comporte un logement dans lequel vient se placer un élément élastique qui peut être un ressort spirale, un ou plusieurs joncs. La buse est donc maintenue sur la lance par compression de ce ou ces éléments élastiques. Le montage et le démontage s'effectuent avec une grande facilité, les buses sont de forme simple, mais la continuité thermique est faible entre la buse et la lance. La buse monte rapidement en température, ce qui entraîne une perturbation de l'écoulement de gaz de protection.

Selon encore une autre technique connue, l'extrémité du corps de lance qui reçoit la buse est légèrement conique, le diamètre inférieur de la buse est ajusté au petit diamètre de cette portée conique. Le montage est réalisé en poussant sur la buse et, par déformation élastique, la partie fendue de la buse épouse la forme du cône de la lance. Pour améliorer cet assemblage, on peut prévoir un ressort périphérique pour pincer cette zone fendue et améliorer la qualité du contact de la buse sur la lance, ce qui est favorable à un bon échange thermique entre la buse et la lance. Cette solution a pour avantages une grande simplicité de fabrication des pièces et du montage réalisé, et un bon échange thermique entre la buse et la lance. Cependant, en cas d'utilisation intensive de la torche, la buse monte en température, la zone élastique de la buse se relâche, le ressort se détend, et la buse tombe aussi dans le bain de fusion.

La présente invention a pour but de fournir une disposition qui ne présente pas les inconvénients des solutions connues et qui, pour un coût faible, procure à la fois un montage simple de la buse sur la lance, une fixation sûre, même en cas d'échauffement, et un bon transfert thermique entre buse et corps de lance.

Pour obtenir ce résultat, l'invention fournit une lance pour soudage électrique sous atmosphère protectrice, comprenant un corps généralement cylindrique contenant des moyens de guidage d'un fil-électrode, une buse destinée à être montée sur l'extrémité du corps, et des moyens de retenue s'opposant à la séparation de la buse et du corps, comprenant un cylindre fendu entourant la buse sur plus de la moitié de la périphérie, comportant au moins un premier saillant dirigé vers l'intérieur, reçu dans une gorge circulaire formée dans la surface extérieure de la buse, et au moins un second saillant, dirigé vers l'intérieur, coopérant avec une butée axiale formée sur le corps.

L'invention va maintenant être exposée de façon plus détaillée à l'aide d'un exemple pratique illustré par les dessins, sur lesquels :
- la figure 1 est une vue en élévation, éclatée, d'une lance conforme à l'invention ;
- la figure 2 est une vue en coupe de la lance de la figure 1, à l'état monté ;
- la figure 3 est une vue en perspective du ressort de retenue des figures 1 et 2 ;
- la figure 4 est une coupe agrandie selon la ligne IV-IV de la figure 1, et montrant une variante.

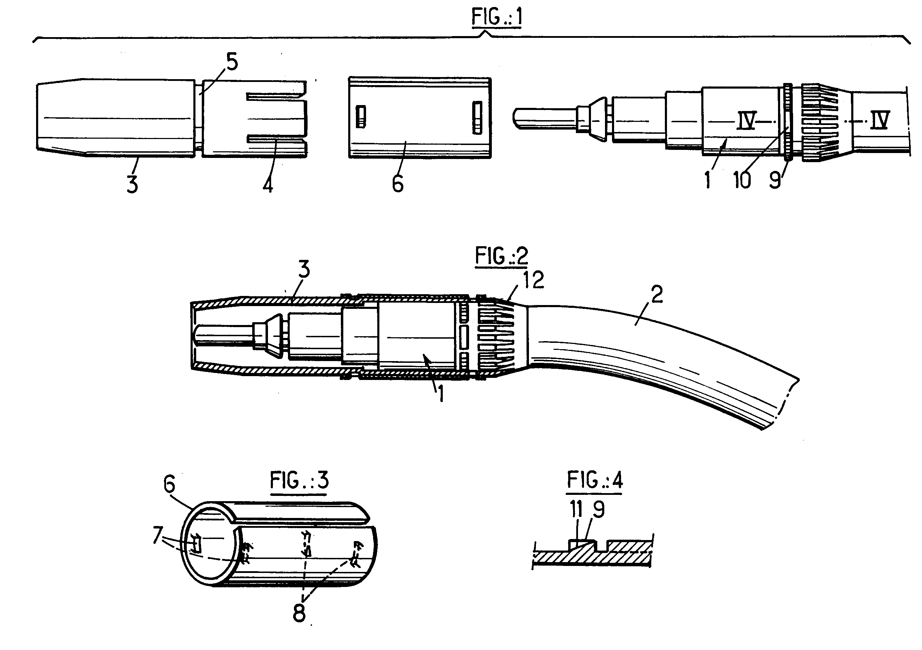

La lance décrite aux figures comprend un corps de lance 1 qui, à une de ses extrémités, à droite sur les figures 1 et 2, se raccorde à un conduit d'alimentation 2, à travers lequel passe le gaz destiné à former l'atmosphère protectrice, ainsi que le fil-électrode (non représenté).

Le corps 1 est d'un type classique, bien connu de l'homme du métier, et ne sera pas décrit de façon plus détaillée, sauf en ce qui concerne les éléments qui sont en rapport direct avec la présente invention.

Sur le corps 1 vient se monter une buse typiquement cylindro-conique 3, dont la zone arrière, destinée à venir en contact avec le corps, présente des fentes longitudinales 4, destinées à assurer un contact élastique avec la surface du corps. En avant des fentes 4, en allant vers la direction opposée au conduit d'alimentation 2, la buse présente extérieurement une gorge circulaire 5, dont on exposera plus loin l'utilité.

Selon un aspect de l'invention, on prévoit un ressort de retenue 6, décrit en particulier à la figure 3, qui est un ressort plat roulé avec une forme cylindrique, entourant la buse sur un peu moins de 360° et constituant par conséquent un cylindre fendu, dont les extrémités périphériques sont séparées par une fente longitudinale. Le cylindre 6 présente, vers une de ses extrémités, deux bossages 7, diamétralement opposés, dirigés radialement vers l'intérieur, et délimités axialement par deux faces sensiblement radiales. Le cylindre présente, vers son extrémité opposée, deux autres bossages 8 en vis-à-vis, qui sont analogues aux bossages 7.

La forme des bossages 7 est telle qu'ils peuvent pénétrer pratiquement sans jeu dans la gorge 5, laquelle est à section transversale sensiblement carrée ou rectangulaire. Au repos, le diamètre intérieur du ressort 6 est légèrement inférieur au diamètre extérieur de la buse 3 dans la région qui contient la gorge 5. Par élasticité, il est possible d'enfiler le ressort 6 sur la buse 3, à partir de l'extrémité opposée à la partie tronconique, en profitant de l'élasticité résultant de la présence des fentes longitudinales 4. La force du ressort 6 est calculée pour qu'on puisse pousser ce ressort jusqu'à ce que les bossages 7 tombent dans la rainure 5, de façon à assurer une bonne liaison, sans jeu, entre la buse 3 et le ressort 6.

Le corps 1 présente, au voisinage de sa liaison avec le conduit d'alimentation 2, une nervure circulaire extérieure 9, à bords sensiblement radiaux. Cette nervure 9 est placée de façon à constituer une butée définissant la position désirée pour la buse 3. La nervure 9 est interrompue par deux échancrures 10, diamétralement opposées, à fond parallèle à l'axe du corps, par lesquelles les bossages 8 du ressort de retenue 6 peuvent passer pour aller au-delà de la nervure 9, en allant vers le conduit d'alimentation.

La distance entre les ergots 7 et 8 du ressort est calculée pour que, lorsque les ergots 7 sont dans la rainure 5, et la buse 3 est dans sa position de montage normale, c'est-à-dire en appui contre la nervure 9, la distance entre les ergots 7 et les ergots 8 soit très légèrement inférieure à la distance entre la rainure 5 et la face de la nervure 9 qui est tournée vers le conduit d'alimentation, de telle façon que, après que l'on a fait passer les ergots 8 dans les passages 10, et tourné le ressort 6 autour de l'axe de corps, le frottement entre les ergots 8 et la face arrière de la nervure 9 soit suffisant pour empêcher un déplacement du ressort 6 par rapport au corps 1. Il est possible d'augmenter l'effet de ce frottement en prévoyant des reliefs appropriés sur la face de la nervure 9, comme des encoches coopérant avec les bords de l'ergot 8.

On observera que, dans la pratique, on monte d'abord le ressort 6 sur la buse 3, et on fait tourner ensuite l'ensemble formé par le ressort et la buse autour de l'axe du corps pour amener les ergots 8 dans la position désirée.

La figure 4 montre une variante dans laquelle chacune des échancrures 10 présente une rampe 11 dont la surface s'écarte radialement de celle du corps 1 en allant en direction du conduit d'alimentation 2. Le rôle de ces rampes est de coopérer avec les bossages 8 du ressort de retenue 6, de façon à leur permettre de franchir la rainure 9 lorsque le ressort est poussé en direction de la liaison avec le conduit d'alimentation 2, pour retomber au-delà de cette rainure.

Le ressort est monté dès que les ergots 8 ont franchi les rampes 11, si les ergots ont été placés au préalable dans la rainure 5. Par prudence, il est cependant conseillé de faire tourner le ressort avec ou sans la buse, d'un angle de quelques dizaines de degrés par rapport à la position correspondant à sa mise en place, de façon que les ergots 8 ne risquent pas de fatiguer le métal au voisinage de la rampe 11.

On a indiqué plus haut les modes d'assemblage de la lance conforme à l'invention. Si on désire la démonter, dans le cas où les échancrures 10 sont à fond parallèle à l'axe du corps, il suffit de faire tourner le ressort 6, ou l'ensemble formé par la buse 3 sur laquelle est monté le ressort, pour amener les bossages 8 en face de ces échancrures. Dans le cas des rampes 11, il suffit de soulever le ressort 6 pour faire repasser les ergots 8 du côté opposé de la nervure 9. Pour cela, on peut utiliser n'importe quel outil approprié.

On a représenté en 12, sur la figure 2, au voisinage de la jonction avec le conduit d'alimentation 2, une série de nervures ou ailettes portées par le corps, et qui servent à améliorer son refroidissement pendant la marche. Bien entendu, ces ailettes 12 sont écartées de la nervure 9 d'une distance au moins égale à la dimension longitudinale des bossages 8.

L'invention est susceptible de diverses variantes. Par exemple, les bossages 7 et 8 peuvent être remplacés par des saillants rapportés, fixés sur la face intérieure du ressort de retenue 6 par des moyens appropriés. Le nombre, la forme et la position de ces bossages peuvent également différer de la réalisation décrite, à condition que la rainure 5, la nervure 9 et les rampes 11 aient des formes correspondantes.

## Revendications

1. Lance pour soudage électrique sous atmosphère protectrice, comprenant un corps (1) généralement cylindrique contenant des moyens de guidage d'un fil-électrode, une buse (3) destinée à être montée sur l'extrémité du corps, et des moyens de retenue (6) s'opposant à la séparation de la buse et du corps, caractérisée en ce que les moyens de retenue (6) comprennent un cylindre fendu entourant la buse (3) sur plus de la moitié de la périphérie, et comporte au moins un premier saillant (7) dirigé vers l'intérieur, reçu dans une gorge circulaire (5) formée dans la surface extérieure de la buse, et au moins un second saillant (8), dirigé vers l'intérieur, coopérant avec une butée axiale (9) formée sur le corps (1).

2. Lance selon la revendication 1, caractérisée en ce que la butée est constituée par une nervure annulaire (9) présentant au moins une échancrure (10) par laquelle le second saillant (8) peut passer au-delà de ladite nervure dans la direction opposée à celle de la progression du fil-électrode.

3. Lance selon la revendication 1, caractérisée en ce que la nervure (9) comporte au moins une surface de rampe (11) destinée à faciliter l'écartement radial du second saillant (8) lors de la mise en place du ressort (6) par coulissement le long du corps.

## Claims

1. Torch for electric welding under a protective atmosphere, comprising a generally cylindrical body (1) containing means for guiding a wire electrode, a nozzle (3) designed to be mounted on the end of the body, and retaining means (6) opposing separation of the nozzle and the body, characterized in that the retaining means (6) comprise a split cylinder surrounding the nozzle (3) over more than half the periphery, and comprise at least one first projection (7) directed inwards, received in a circular groove (5) formed in the outer surface of the nozzle, and at least one second projection (8), directed inwards, cooperating with an axial stop (9) formed on the body (1).

2. Torch according to claim 1, characterized in that the stop consists of an annular rib (9) having at least one indentation (10) through which the second projection (8) can pass beyond the said rib in the opposite direction to that in which the wire electrode progresses.

3. Torch according to claim 1, characterized in that the rib (9) comprises at least one surface incline (11) designed to facilitate radial separation of the second projection (8) when the spring (6) is put in place by sliding it along the body.

## Patentansprüche

1. Brenner zum elektrischen Schutzgasschweißen, umfassend einen mit Führungsmitteln für eine Drahtelektrode ausgestatteten, im wesentlichen zylindischen Körper (1), eine Düse (3) zur Montage auf das vordere Ende des Körpers und der Trennung von Körner und Düse entgegenwirkende Haltemittel (6), dadurch gekennzeichnet, daß die Haltemittel (6) einen geschlitzten Zylinder umfassen, der die Düse (3) über mehr als die Hälfte ihrer Außenfläche umschließt, und mindestens einen ersten, nach innen weisenden Vorsprung (7), der in einer an der Außenfläche der Düse ausgebildeten, ringförmigen Ausnehmung aufgenommen ist, und mindestens einen zweiten, nach innen weisenden Vorsprung (8), der mit einem auf dem Körper (1) ausgebildeten, axialen Anschlag (9) zusammenwirkt, aufweist.

2. Brenner nach Anspruch 1, dadurch gekennzeichnet, daß der Anschlag eine ringförmige Rippe (9) ist, die mindestens eine bogenförmige Ausnehmung (10) aufweist, über die der zweite Vorsprung (8) in der dem Vorschub der Drahtelektrode entgegengesetzten Richtung über die Rippe hinweg gelangen kann.

3. Brenner nach Anspruch 1, dadurch gekennzeichnet, daß die Rippe mindestens eine Anschrägung (11) zur Erleichterung des radialen Abhebens des zweiten Vorsprungs (8) während des Anbringens der Feder (6) mittels Aufschiebens entlang des Körpers hat.
